# EUROPÄISCHE PATENTSCHRIFT

(11) **EP 3 861 916 B1**
(45) Veröffentlichungstag und Bekanntmachung des Hinweises auf die Patenterteilung: **07.06.2023**
(21) Anmeldenummer: 21155517.2
(22) Anmeldetag: 05.02.2021
(51) Int. Cl.: A47L 13/38, A01D 7/04, A01D 7/10

(54) **REINIGUNGSGERÄT ZUM ENTFERNEN VON SPINNWEBEN**
CLEANING DEVICE FOR REMOVING COBWEBS
APPAREIL DE NETTOYAGE PERMETTANT D'ENLEVER LES TOILES D'ARAIGNÉE

(30) Priorität: 08.02.2020 DE 202020000553 U; 03.04.2020 DE 102020002156
(43) Veröffentlichungstag der Anmeldung: 11.08.2021
(73) Patentinhaber: Fichtl, Markus, 86934 Reichling (DE)
(72) Erfinder: Fichtl, Markus, 86934 Reichling (DE)
(74) Vertreter: Grape & Schwarzensteiner

(56) Entgegenhaltungen:
- EP-A1- 2 449 940
- GB-A- 2 091 981
- US-A- 4 059 945
- US-A- 4 483 133
- US-B1- 9 648 862

## Beschreibung

Bei der vorliegenden Erfindung handelt es sich um ein mechanisches, handgeführtes Reinigungsgerät zum Entfernen von Spinnweben von Wänden, Zimmerdecken, Einrichtungsgegenständen u .a.

Spinnweben werden üblicherweise mit Hilfe von sogenannten Staubwedeln oder speziellen Besen entfernt. Manche der dafür vorgeschlagenen Gerätschaften sind dazu elektrostatische ausgerüstet, sodass die Spinnweben daran haften sollen. Von Nachteil ist dabei, dass die Gerätschaften meist direkt über die zu reinigenden Flächen, häufig auch unter Druck geführt werden müssen und dabei die Spinnweben auf dem Untergrund lediglich verschmiert aber nicht tatsächlich und vollständig entfernt werden.

Der Erfindung liegt die Überlegung zugrunde, dass Abhilfe mit einem rechenartigen Gerät geschaffen werden könnte, mit welchem Spinnweben und dergleichen an Wänden oder Möbeln anhaftende Verunreinigungen sicher und vollständig abgehoben und entfernt werden können.

Rechenartige Reinigungsgeräte sind beispielsweise aus der US 2009/0056299 A1, US 4 969 675 A, FR 2631 511 A1, GB 2 091 981 A oder US 4 850 185 A bekannt.

Diese Schriften zeigen und beschreiben allerdings Gerätschaften, die nicht zum Entfernen von Spinnweben gedacht sind und sich als solche auch nicht dazu eignen.

Insbesondere sind die in der US 2009/0 056299 A1, US 4 969675 A, FR 2631 511 A1 erkennbaren Zinken nicht einziehbar, sondern starr an einem Reinigungskopf befestigt und dienen als Gartenrechen (US 2009/0 056299 A1), zur Entfernung von Hundekot (US 4 969675 A) oder zum Ausstechen von Unkraut (US 4 850 185 A) .

Die US 4 850 185 A beschreibt einen Gartenrechen mit einer Vielzahl von Zinken auf, an welchem eine Abstreifvorrichtung als separates Bauteil zum Entfernen von Blättern und dergleichen angeordnet ist.

Die GB 2 091 981 A beschreibt ein Gerät, mit welchem der Sandboden in einem Bunker (Golfplatz) geglättet werden kann. Dazu sind in einem Rohr flexible Elemente ein- und ausfahrbar angeordnet.

Die US 4 483 133 A beschreibt ein Reinigungsgerät mit Zinken, die in einem hohlen Haltegriff ein-und ausfahrbar gehalten sind, so dass Zinken und hohler Haltegriff in Wirkverbindung kommen.

Die EP 2 449 940 A1 beschreibt eine Vorrichtung zum Entfernen von Spinnweben, Staubfäden und dergleichen, der im Wesentlichen einen langgestreckten, entlang mindestens einer seiner Kanten mit einer Zahnung versehenen Aufnehmer aus flachem Kunststoff aufweist.

Die US 9,648,862 B1 beschreibt eine teleskopierbare Bürste zur Entfernung von Spinnweben und Spinnen, mit welcher es möglich ist nach dem Entfernen der Spinnweben ein Pestizid auf den entsprechenden Bereich auszutragen.

Die US 4,059,945 beschreibt eine Harke, die mit einer Vorrichtung ausgerüstet ist, mit welcher Fremdkörper von der Harke abgestreift werden können.

Gegenstand der vorliegenden Erfindung ist gemäß Anspruch 1 ein Reinigungsgerät zum Entfernen von Spinnweben, das mehrere Zinken, die an einem einen Reinigungskopf bildenden Gehäuse nebeneinander angeordnet sind und eine mit dem Gehäuse verbundene Haltestange zum Halten und Bedienen des Reinigungsgerätes aufweist, wobei die Zinken in Arbeitsrichtung gekrümmt und/oder geneigt und an bzw. in dem Gehäuse ein- und ausfahrbar gehalten sind, wobei das Gehäuse und die Zinken in Wirckontakt stehen und wobei das Gehäuse ein flacher Hohlkörper ist, in dem Gehäusedurchbrüche für jede Zinke vorgesehen sind, über welche die Zinken aus dem bzw. in das Gehäuse aus- und einfahrbar sind.

Die Vorzüge dieses Reinigungsgerätes ergeben sich daraus, dass die Entfernung der Spinnweben von davon zu reinigenden Oberflächen durch in Arbeitsrichtung gekrümmte und/oder geneigte, in den Reinigungskopf bzw. das Gehäuse ein- und ausfahrbare Zinken erfolgt. Einerseits wird durch die Krümmung bzw. Neigung der Zinken in Arbeitsrichtung ein Abheben der Spinnweben von den davon zu reinigenden Oberflächen und ein Wegziehen in einem einzigen Arbeitsgang gewährt. Die Spinnweben werden dabei auf der zu reinigenden Oberfläche nicht verschmiert. Andererseits ist für eine leichte und rasche Reinigung des Gerätes von den eingesammelten Spinnweben Sorge getragen, welche sich beim Einfahren der Zinken an den Lochrändern abgestreift haben.

Das Abstreifen der Spinnweben beim Einfahren der Zinken und insbesondere dann die Reinigung des Gehäuses sind umso leichter, je glatter die Oberfläche von Gehäuse und Zinken ist. Für deren Herstellung ist daher auf die Auswahl der Materialien zu achten. Kunststoffe oder mit Kunststoff beschichtete Leichtmetalle sind empfehlenswert.

Es handelt sich also um ein Reinigungsgerät, das die Spinnweben von davon zu reinigenden Oberflächen entfernt, ohne sie darauf zu verschmieren, wobei am Ende einer Haltestange ein Reinigungskopf angeordnet ist, wobei das Entfernen von Spinnweben von davon zu reinigenden Oberflächen durch eine Anordnung von am Reinigungskopf nebeneinander in Reihe stehenden Reinigungszinken erfolgt, welche in Arbeitsrichtung hin gekrümmt oder geneigt sind, und sich dadurch die Spinnweben von der zu reinigenden Oberfläche zunächst etwas abheben und dann wegziehen, um sie nicht darauf zu verschmieren wenn man das Reinigungsgerät über die zu reinigende Oberfläche zieht, wobei der Reinigungskopf in den Reinigungskopf einziehbare Reinigungszinken aufweist, wobei die Reinigungszinken sich beim Einziehen die eingesammelten Spinnweben am Gehäuse abstreifen und somit ein leichtes und rasches Säubern des Reinigungsgerätes ermöglicht ist.

Diese und weitere Merkmale, die sich aus den Unteransprüchen als bevorzugte Ausführungsformen ergeben, sind aus dem Stand der Technik nicht bekannt und sind auch nicht durch diesen nahegelegt.

In einer Ausführungsform weist das den Reinigungskopf bildende Gehäuse eine gewölbte Räumfläche auf. Die flache Ausführungsform ist besser zur Säuberung von engen Bereichen geeignet, wohingegen diejenige mit gewölbter Räumfläche, die mehr oder weniger stark ausgeprägt sein kann, besser zum Entfernen von Spinnweben ist, die von Decken weiter herunter oder in Ecken weiter weg von den Wänden hängen.

Ist das den Reinigungskopf bildende Gehäuse geneigt zur Haltestange, also abgewinkelt dazu angeordnet, ist die Bedienung des Gerätes für den Anwender wesentlich erleichtert.

Besonders bevorzugt sind in dem Gehäuse Gehäusedurchbrüche, der Form der Zinken im Wesentlichen angepasste Löcher, für jede der vorhandenen Zinken vorgesehen, über welche die Zinken dann aus dem bzw. in das Gehäuse aus- und einfahrbar sind. Auf diese Weise lassen sich die eingesammelten Spinnweben beim Einziehen der Zinken in das Gehäuse an den Lochrändern der einzelnen Zinken zuverlässig abstreifen. Dazu ist es wieder von Vorteil, dass das Gehäuse und die Zinken eine glatte Oberfläche aufweisen und die Gehäusekanten abgerundet sind.

Zur leichten Montage und Bedienung der Zinken sind diese an einem Zinkenträger in dem Gehäuse in Reihe angeordnet. Das Ein- und Ausfahren der Zinken erfolgt in vorteilhafter Weise über einen in dem Gehäuse und in der Haltestange vorgesehenen Mechanismus, der im Rahmen der vorliegenden Erfindung aus einer Drehachse, einem Seilzug, einer Seilführung und einer Feder aufgebaut ist. Der Mechanismus ist über den Seilzug mittels eines am zum Gehäuse gegenüberliegenden Ende der Haltestange und mit dem Seilzug in Wirkverbindung stehenden Druckknopfes derart betätigbar, dass ein Zug auf das Seil ausgeübt und ein Absenken des Zinkenträgers/Einziehen der Zinken herbeigeführt wird.

In einer weiteren vorteilhaften Ausgestaltung ist das den Reinigungskopf bildende Gehäuse über ein Drehgelenk 12 dreh- und/oder kippbar angeordnet. Dieses Merkmal dient zur Verbesserung der Handhabbarkeit bei verschiedensten, mitunter verwinkelten räumlichen Gegebenheiten.

Zur weiteren Verbesserung der Handhabbarkeit des erfindungsgemäßen Reinigungsgerätes weist die Haltestange an ihrem unteren Ende einen Handgriff, vorzugsweise mit Gripp auf und gegebenenfalls ist die Haltestange für besonders hohe Räume oder schwer zugängliche Bereiche in an sich bekannter Weise teleskopierbar ausgeführt.

Am unteren Ende der Haltestange ist in einer weiteren vorteilhaften Ausgestaltung des erfindungsgemäßen Reinigungsgerätes dem zur Betätigung des Ein- und Ausfahrmechanismus vorgesehenen Druckknopf ein Feststellknopf zugeordnet, mit welchem die Zinken im eingefahrenen Zustand arretiert werden können. Damit ist sowohl die Reinigung des Gerätes von den Spinnweben sowie die Aufbewahrung des Gerätes erleichtert.

Die Erfindung wird nachfolgend anhand der beigefügten Zeichnungen näher erläutert. Darin zeigen:
- Fig. 1: das Reinigungsgerät mit flachem Reinigungskopf und ausgefahrenen Zinken sowie der Haltestange;
- Fig. 2: einen Querschnitt durch das Gehäuse des flachen Reinigungskopfes mit einziehbaren Reinigungszinken, sowie einen Teil der Haltestange und die Darstellung der inneren Mechanik;
- Fig. 3: einen Querschnitt durch das Gehäuse der Version des mit einer Räumfläche versehenen Reinigungskopfes mit einziehbaren Zinken.

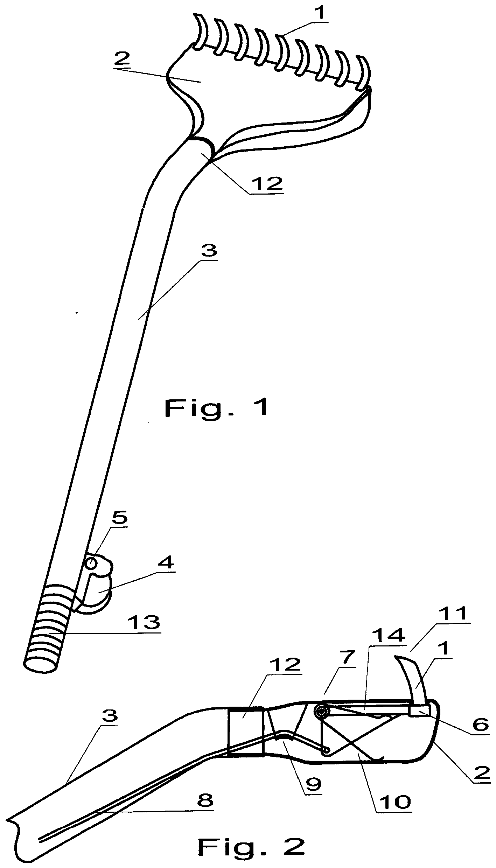

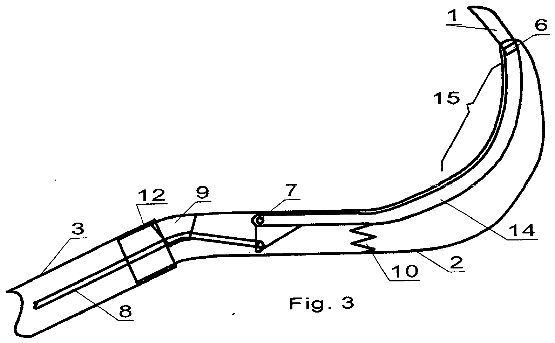

Der Reinigungskopf mit seinem Gehäuse 2 kann in unterschiedlichen Ausführungen bestehen. Flache Ausführungen dienen dazu, enge zu reinigende Bereiche besser säubern zu können. Fig. 1 und Fig. 2 zeigen solche flachen Ausführungen des Reinigungskopfes. Hingegen eignen sich Ausführungen mit mehr oder weniger stark ausgeprägter Räumfläche 15 gemäß Fig. 3 besser für das Entfernen von Spinnweben, die von Decken weiter herunter hängen oder in Ecken weiter weg von den Wänden hängen.

Das Reinigungsgerät mit einziehbaren Reinigungszinken besteht aus einer Haltestange 3 mit Drucktaste 4 und Handgriff 13 an ihrem einen, vom Anwender gehaltenen Ende, sowie am anderen Ende einem den Reinigungskopf bildenden Gehäuse 2 mit glatter Oberfläche und gerundeten Kanten, aus dem quer zur Richtung der Haltestange 3 in einer Linie nebeneinander angeordnet aus Gehäusedurchbrüchen Zinken 1 mit ebenfalls glatter Oberfläche hervorragen. Die Zinken 1 weisen eine bogenförmige Krümmung hin in Richtung zur Haltestange 3 auf. Diese Reihe von Zinken 1 dient dem Abziehen von Spinnweben von davon zu reinigenden Oberflächen und lässt sich in das Gehäuse vollständig ohne bleibenden Überstand einziehen, indem der Anwender die Drucktaste 4 an der Haltestange 3 betätigt.

Durch das Einziehen streifen sich die Zinken 1 an den Gehäusedurchbrüchen, den Lochrändern, die eingesammelten Spinnweben ab, wodurch anschließend bei eingezogen gehaltenen Zinken sich das Gerät seinerseits auf einfache und schnelle Weise von den eingesammelten Spinnweben reinigen lässt. Die glatten Oberflächen von Gehäuse, Zinken und Haltestange sowie die abgerundeten Außenkanten des Gehäuses dienen dabei dazu, ein Anhaften der Spinnweben am Gerät zugunsten leichter Reinigung desselben möglichst zu vermeiden.

Bei dem Reinigungsgerät mit seinen einziehbaren Reinigungszinken besitzen die Reinigungszinken 1 ihrerseits als Krümmung Rundbogenform, mit Krümmungsradius entsprechend dem Abstand der Reinigungszinken von der Drehachse 7 des Zinkenträgers 6, und zeigen mit ihren Enden in Richtung der Haltestange 3, also zum Anwender hin. Die Zinken 1 weisen zudem an ihren Enden eine Abflachung ihrer Auflagefläche als Anschrägung 11 mit spitzem Winkel in Arbeits- bzw. Anwenderrichtung auf, um die Spinnweben möglichst gut und vollständig und in einem einzigen Arbeitsgang von den zu reinigenden Oberflächen, wie Zimmerdecken und Wänden, abziehen zu können. Die Reinigungszinken 1 können gegebenenfalls aus Weichplastik oder Elastomer bestehen oder einen Überzug aus solchem elastischen Material besitzen. Damit lässt sich eine mögliche Verletzung der zu reinigenden Oberflächen verhindern.

Bei dem Reinigungsgerät mit seinen einziehbaren Reinigungszinken 1 verbindet innerhalb des Gehäuses 2 ein Quersteg als Zinkenträger 6 die Zinken 1 miteinander. Zudem verbindet ein Längssteg 14 diesen Zinkenträger 6 mit der ebenfalls innerhalb des Gehäuses liegenden, quer verlaufenden Drehachse 7, um welche die Zinkeneinheit (Zinken 1 plus Zinkenträger 6) beim Ein-und Ausfahren der Zinken 1 in das bzw. aus dem Gehäuse schwenkt. Der Krümmungsradius der Zinken 1 entspricht ihrem Abstand zu dieser Drehachse 7.

Die Feder 10 innerhalb des Gehäuses drückt mit angemessener Federkraft gegen den Zinkenträger 6 und hält somit die Zinken 1 aus dem Gehäuse 2 ausgefahren. Statt eines Quersteges als Zinkenträger 6, kann auch von der Drehachse 7 her eine Auffächerung des Längssteges 14 hin zu den einzelnen Reinigungszinken 1 bestehen (nicht gezeigt).

Der Seilzug 8, der durch die Seilführung 9 verläuft, überträgt die Bewegung der Drucktaste 4 auf die Zinkeneinheit (Zinken 1 plus Zinkenträger 6), wodurch die Zinken 1 samt Zinkenträger 6 und Längssteg 14 im Gehäuse 2 zum Einziehen der Zinken 1 abgesenkt werden. Die Seilführung 9 hält den Seilverlauf im Bereich des Drehgelenks 12 mittig.

An der Haltestange 3 befindet sich neben der Drucktaste 4 der dieser zugeordnete Feststellknopf 5 als weiteres Bedienelement, welches als Sperre dient, um während der Aufbewahrung und Reinigung des Reinigungsgerätes die Zinken 1 eingezogen zu halten. Beim Loslassen des Druckknopfes 4 oder beim Entarretieren des Feststellknopfes 5 entfällt die Seilspannung und die Feder 10 drückt die Zinken wieder aus dem Gehäuse 2.

Aus Gründen guter Handhabung befindet sich das Gehäuse 2 mit den Zinken 1 gegenüber der Haltestange 3 etwas zurückgeneigt bzw. abgewinkelt an dieser, so dass das Gehäuse 2 bei der Arbeit geneigt zu der zu reinigenden Oberfläche hinzeigt.

Das Drehgelenk 12 im Übergang von der Haltestange 3 auf das Gehäuse 2 mit den Zinken 1, eröffnet die Möglichkeit das Gehäuse 2 bei Bedarf um die Längsachse der Haltestange 3 zu verdrehen.

Bei seiner Reinigungsarbeit zieht der Anwender dieses Gerät an der Haltestange haltend, bei ausgefahrenen Zinken in seine Richtung über die von Spinnweben zu säubernde Oberfläche. Die Feder 10 im Gehäuse 2 drückt dabei mit maßvoller Federkraft die Zinken 1 aus dem Gehäuse 2.

Um hohe zu reinigende Bereiche gut zu erreichen, können zusätzliche Verlängerungshaltestangen vorgesehen werden. Gegebenenfalls ist die Haltestange teleskopierbar ausgeführt.

Die Erfindung ist nicht auf die dargestellte Ausführungsform beschränkt. So liegt es im Rahmen der vorliegenden Erfindung, dass nicht für jede vorhandene Zinke ein eigener Gehäusedurchbruch, welcher die Zinke umschließt, vorgesehen ist. Vielmehr umfasst die Erfindung auch solche Ausführungsformen, bei denen im Gehäuse ein oder mehrere schlitzförmige Öffnung(en) vorgesehen sind, durch welche die Zinken dann in Gruppen oder alle zusammen ein- und ausfahrbar sind. Wesentlich ist, dass die Schlitze so dimensioniert sind, dass die Zinken zum Abstreifen der Spinnweben mit den Rändern der Schlitze in Wirkkontakt stehen, was ja auch für die bereits beschriebenen Durchbrüche bzw. Randlöcher für jede Zinke gilt.

Mit der vorliegenden Erfindung wird ein Arbeitsgerät zur leichten und gleichzeitig effizienten Entfernung von Spinnweben ohne deren Verschmieren auf der zu reinigenden Oberfläche zur Verfügung gestellt. Das Gerät lässt sich aufgrund der glatten Oberflächen selbst leicht reinigen. Durch die Feststellmöglichkeit der Zinken im eingezogenen Zustand lässt sich das Reinigungsgerät leichter aufbewahren.

## Patentansprüche

1. Reinigungsgerät zum Entfernen von Spinnweben, das mehrere Zinken (1), die an einem einen Reinigungskopf bildenden Gehäuse (2) nebeneinander angeordnet sind und eine mit dem Gehäuse (2) verbundene Haltestange (3) zum Halten und Bedienen des Reinigungsgerätes aufweist, wobei die Zinken (1) in Arbeitsrichtung gekrümmt und/oder geneigt und an bzw. in dem Gehäuse (2) und in diesem ein- und ausfahrbar gehalten sind, wobei das Gehäuse (2) und die Zinken (1) in Wirkkontakt stehen
**dadurch gekennzeichnet, dass**
das Gehäuse (2) ein flacher Hohlkörper ist, in dem Gehäusedurchbrüche für jede Zinke (1) vorgesehen sind, über welche die Zinken (1) aus dem bzw. in das Gehäuse (2) aus- und einfahrbar sind.

2. Reinigungsgerät zum Entfernen von Spinnweben gemäß Anspruch 1, **dadurch gekennzeichnet, dass** das Gehäuse (2) eine gewölbte Räumfläche (15) aufweist.

3. Reinigungsgerät zum Entfernen von Spinnweben gemäß den Ansprüchen 1 und 2, **dadurch gekennzeichnet, dass** das Gehäuse (2) geneigt zur Haltestange (3) angeordnet ist.

4. Reinigungsgerät zum Entfernen von Spinnweben gemäß den Ansprüchen 1 bis 3, **dadurch gekennzeichnet, dass** die Zinken (1) an einem Zinkenträger (6) in dem Gehäuse (2) in Reihe angeordnet sind.

5. Reinigungsgerät zum Entfernen von Spinnweben gemäß den Ansprüchen 1 bis 4, **dadurch gekennzeichnet, dass** die Zinken (1) über einen in dem Gehäuse (2) und in der Haltestange (3) vorgesehenen Mechanismus aus- und einfahrbar sind.

6. Reinigungsgerät zum Entfernen von Spinnweben gemäß Anspruch 5, **dadurch gekennzeichnet, dass** der Mechanismus aus einer Drehachse (7), einem Seilzug (8), einer Seilführung (9) und einer Feder (10) aufgebaut ist, wobei der Mechanismus über den Seilzug (8) mittels eines am zum Gehäuse (2) gegenüberliegenden Ende der Haltestange (3) und mit dem Seilzug (8) in Wirkverbindung stehenden Druckknopfes (4) derart betätigbar ist, dass ein Zug auf das Seil ausgeübt wird.

7. Reinigungsgerät zum Entfernen von Spinnweben gemäß den Ansprüchen 1 bis 6, **dadurch gekennzeichnet, dass** das den Reinigungsköpf bildende Gehäuse (2) über ein Drehgelenk (12) dreh- und/oder kippbar angeordnet ist.

8. Reinigungsgerät zum Entfernen von Spinnweben gemäß den Ansprüchen 1 bis 7, **dadurch gekennzeichnet, dass** die Haltestange (3) einen Haltegriff (13) aufweist und gegebenenfalls teleskopierbar ausgeführt ist.

## Claims

1. Cleaning device for removing cobwebs, having a plurality of tines (1) arranged side by side on a cleaning head forming housing (2) and a holding rod (3) connected to the housing (2) for holding and handling the cleaning device, wherein the tines (1) are curved and/or inclined in working direction and held on or in the housing (2) and retractable and extendable therein, wherein the housing (2) and the tines (1) are in active contact,
**characterized in that**
the housing (2) is a flat hollow body in which housing breakthroughs are provided for each tine (1), via which the tines (1) can be extended and retracted out of or into the housing (2).

2. Cleaning device for removing cobwebs according to claim 1, **characterized in that** the housing (2) has a curved clearing area (15).

3. Cleaning device for removing cobwebs according to claims 1 and 2, **characterized in that** the housing (2) is arranged inclined to the holding rod (3).

4. Cleaning device for removing cobwebs according to claims 1 to 3, **characterized in that** the tines (1) on a tine carrier (6) in the housing (2) are arranged in row.

5. Cleaning device for removing cobwebs according to claims 1 to 4, **characterized in that** the tines (1) are extendable and retractable by means of a mechanism provided in the housing (2) and the holding rod (3).

6. Cleaning device for removing cobwebs according to claim 5, **characterized in that** the mechanism consists of a rotation axis (7), a cable pull (8), a cable guide (9) and a spring (10), wherein the mechanism is operable via the cable pull (8) by means of a push button (4) arranged on an end of the holding rod (3) opposite the housing (2) in active connection with the cable pull (8), such that a pull is exerted on the cable.

7. Cleaning device for removing cobwebs according to claims 1 to 6, **characterized in that** the housing (2) forming the cleaning head arranged pivotable and/or tiltable via a swivel joint (12).

8. Cleaning device for removing cobwebs according to claims 1 to 7, **characterized in that** the holding rod (3) has a handle (13) and, where appropriate, is telescopic.

## Revendications

1. Dispositif de nettoyage pour enlever les toiles d'araignées, qui comporte une pluralité des dents (1) qui sont disposées les unes à côté des autres sur un boîtier (2) formant une tête de nettoyage et une tige de maintien (3) reliée au boîtier (2) pour maintenir et faire fonctionner le dispositif de nettoyage, les dents (1) étant courbées et/ou inclinées dans la direction de travail et maintenues sur ou dans le boîtier (2) et pouvant être déplacées vers l'intérieur et l'extérieur, le boîtier (2) et les dents (1) être en contact actif,
**caractérisé en ce que**
le boîtier (2) est un corps creux plat dans lequel il y a des percées de boîtier pour chaque broche (1), par lesquelles les dents (1) sont rétrectable et extensible dans ou hors du boîtier (2).

2. Dispositif de nettoyage pour enlever les toiles d'araignées selon la revendication 1, **caractérisé en ce que** le boîtier (2) présente une surface de nettoyage incurvée (15) .

3. Dispositif de nettoyage pour enlever les toiles d'araignées selon les revendications 1 et 2, **caractérisé en ce que** le boîtier (2) est disposé incliné par rapport à la tige maintien (3).

4. Dispositif de nettoyage pour enlever les toiles d'araignées selon les revendications 1 à 3, **caractérisé en ce que** les dents (1) sont disposées en série sur un support de dent (6) dans le boîtier (2).

5. Dispositif de nettoyage pour enlever les toiles d'araignées selon les revendications 1 à 4, **caractérisé en ce que** les dents (1) sont extensibles et rétractables via un mécanisme prévu dans le boîtier (2) et dans la tige de maintien (3).

6. Dispositif de nettoyage pour enlever les toiles d'araignées selon la revendication 5, **caractérisé en ce que** le mécanisme est constitué d'un axe rotatif (7), d'un palan á câble (8), d'un guide de câble (9) et d'un ressort (10), le mécanisme par l'intermédiaire du câble (8) peut être actionné au moyen d'un bouton-poussoir (4) sur l'extrémité de la tige de maintien (3) opposée au boîtier (2) et qui est en contact fonctionnelle avec le palan á câble (8) de telle manière qu'une traction est appliquée sur le câble.

7. Dispositif de nettoyage pour enlever les toiles d'araignées selon les revendications 1 à 6, **caractérisé en ce que** le boîtier (2) formant la tête de nettoyage est disposé de manière rotatif et/ou inclinable par l'intermédiaire d'un joint tournant (12).

8. Dispositif de nettoyage pour enlever les toiles d'araignées selon les revendications 1 à 7, **caractérisé en ce que** la tige de maintien (3) comporte une poignée (13) et est éventuellement conçue pour être télescopique.
